# EUROPEAN PATENT SPECIFICATION

(11) **EP 3 894 448 B1**
(45) Date of publication and mention of the grant of the patent: **18.01.2023**
(21) Application number: 19809521.8
(22) Date of filing: 03.12.2019
(51) Int. Cl.: C08F 110/06, C08F 4/651

(54) **CATALYST COMPONENTS FOR THE POLYMERIZATION OF OLEFINS**
KATALYSATORKOMPONENTEN ZUR POLYMERISIERUNG VON OLEFINEN
COMPOSANTS DE CATALYSEUR DE POLYMÉRISATION D'OLÉFINES

(30) Priority: 14.12.2018 EP 18212674
(43) Date of publication of application: 20.10.2021
(73) Proprietor: Basell Poliolefine Italia S.r.l., 20121 Milano (IT)
(72) Inventor: MIGNOGNA, Alessandro, 44122 Ferrara (IT); LIGUORI, Dario, 44122 Ferrara (IT); MORINI, Giampiero, 44122 Ferrara (IT); VITALE, Gianni, 44122 Ferrara (IT)
(74) Representative: LyondellBasell
(86) International application number: PCT/EP2019/083487
(87) International publication number: WO 2020/120227

(56) References cited:
- WO-A1-2014/184171
- US-A1- 2011 130 529

## Description

### FIELD OF THE INVENTION

The present disclosure relates to catalyst components for the polymerization of olefins, in particular propylene, comprising a Mg dihalide based support on which are supported Ti atoms and an electron donor selected from a specific class of diphenol derivatives. The present disclosure further relates to the catalysts obtained from said components and to their use in processes for the polymerization of olefins in particular propylene.

### BACKGROUND OF THE INVENTION

Catalyst components for the stereospecific polymerization of olefins are widely known in the art. Concerning the polymerization of propylene, the most spread out catalyst family belongs to the Ziegler-Natta category and in general terms it comprises a solid catalyst component, constituted by a magnesium dihalide on which are supported a titanium compound and an internal electron donor compound, used in combination with an Al-alkyl compound. Conventionally however, when a higher crystallinity of the polymer is required, also an external donor (for example an alkoxysilane) is needed in order to obtain higher isotacticity. One of the preferred classes of internal donors is constituted by the esters of phthalic acid, diisobutylphthalate being the most used. The phthalates are used as internal donors in combination with alkylalkoxysilanes as external donor. This catalyst system gives good performances in terms of activity, isotacticity and xylene insolubility. One of the problems associated with the use of this catalyst system is that the phthalates have recently raised concerns due to the medical issues associated with their use and some compounds within this class have been classified as source of heavy health problems. Consequently, research activities have been devoted to discover alternative classes of internal donors for use in the preparation of catalyst components for propylene polymerization. WO 2014/184171 diphenol derivatives in which both the hydroxy groups of the diphenol can be substituted with different functional groups such as ether, ester, carbamic, and carbonic. Although the performances of the catalyst components including such donors are generally good, it is noted that it is difficult to obtain at the same time very high polymerization activities and high stereospecificity evidenced by the high value of xylene insolubility.

### SUMMARY OF THE INVENTION

Surprisingly, the applicant has found that when the diphenol derivative structures of the prior art are modified with specific type of functional groups it is possible to obtain electron donor compounds that are able to generate solid catalyst components showing at the same time very high activity and high stereospecificity.

It is herein disclosed a solid catalyst component for the polymerization of olefins comprising Mg, Ti, Cl and at least an electron donor compound which is the reaction product obtained by bringing into contact a Mg compound and a Ti compound having at least a Ti-halogen bond with a diphenol derivative of formula (I) 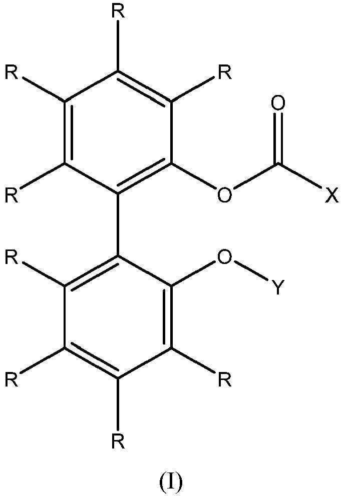 in which X is a chlorine substituted phenyl group and Y is selected from hydrogen or R¹; the R groups, equal to or different from each other, are selected from hydrogen, halogen and C₁-C₁₅ hydrocarbon groups, optionally containing an heteroatom selected from halogen, P, S, N, O and Si, which can be fused together to form one or more cycles, and R¹ is a C₁-C₅ aliphatic group.

### DETAILED DESCRIPTION OF THE INVENTION

Preferably, in the diphenol of formula (I), at least one of the R groups on the phenyl ring is different from hydrogen and selected from halogen or C₁-C₁₅ hydrocarbon groups and more preferably at least two of the R groups are different from hydrogen. In a preferred embodiment, at least 3 and especially at least 4 of the R groups are different from hydrogen. In a particular embodiment, six of the R groups are different from hydrogen. Preferably, the two phenyl rings of the diphenol structure of formula (I) have the same substitution pattern. Accordingly, when the R groups different from hydrogen are in an even number (2, 4, 6, etc.) they are distributed equally in number and position on the two phenyl rings. The R groups different from hydrogen are preferably selected from C₁-C₁₅ hydrocarbon groups and particularly from C₁-C₁₀ alkyl groups. Preferably, the R groups different from hydrogen are C₁-C₅ alkyl groups linear or branched. Among linear alkyl groups methyl is preferred while t-butyl is the preferred branched alkyl group.

R¹ groups are preferably selected from hydrogen or linear C₁-C₅ alkyl groups such as methyl, ethyl and propyl. Hydrogen and methyl are preferred.

The chlorine substituted phenyl group denoted as X can contain one or more chlorine atoms. Preferably, the phenyl group is chlorine monosubstituted.

Preferably the chlorine atom is in ortho position; an especially preferred combination is when R¹ is hydrogen and a chlorine is in ortho position.

When two or more chlorines are present, at least one is in ortho position; the remaining preferably in meta and/or para position. The meta position is preferred. Preferably, only two chlorines are present. It is also possible that the phenyl group, in addition to the chlorine substitution, also contains a C₁-C₅ alkyl group substituent.

Non limiting examples of structures of formula (I) are the following: 6'-methoxy-2',3',5,6-tetramethyl-[1,1'-biphenyl]-2-yl 2-chlorobenzoate, 2',3',5,6-tetramethyl-6'-propoxy-[1,1'-biphenyl]-2-yl 2-chlorobenzoate, 6'-hydroxy-2',3',5,6-tetramethyl-[1,1'-biphenyl]-2-yl 2-chlorobenzoate, 6'-hydroxy-2',3',5,6-tetramethyl-[1,1'-biphenyl]-2-yl 2,3-dichlorobenzoate, 2',3',5,6-tetramethyl-6'-propoxy-[1,1'-biphenyl]-2-yl 2,3-dichlorobenzoate, 6'-methoxy-2',3',5,6-tetramethyl-[1,1'-biphenyl]-2-yl 2,3-dichlorobenzoate, 6'-ethoxy-2',3',5,6-tetramethyl-[1,1'-biphenyl]-2-yl 2,3-dichlorobenzoate, 6'-methoxy-2',3',5,6-tetramethyl-[1,1'-biphenyl]-2-yl 3,4-dichlorobenzoate, 2',3',5,6-tetramethyl-6'-propoxy-[1,1'-biphenyl]-2-yl 3,4-dichlorobenzoate, 6'-hydroxy-2',3',5,6-tetramethyl-[1,1'-biphenyl]-2-yl 3,4-dichlorobenzoate, 6'-ethoxy-2',3',5,6-tetramethyl-[1,1'-biphenyl]-2-yl 3,4-dichlorobenzoate, 6'-hydroxy-2',3',5,6-tetramethyl-[1,1'-biphenyl]-2-yl 2,5-dichlorobenzoate, 2',3',5,6-tetramethyl-6'-propoxy-[1,1'-biphenyl]-2-yl 2,5-dichlorobenzoate, 6'-ethoxy-2',3',5,6-tetramethyl-[1,1'-biphenyl]-2-yl 2,5-dichlorobenzoate, 6'-methoxy-2',3',5,6-tetramethyl-[1,1'-biphenyl]-2-yl 2,5-dichlorobenzoate, 6'-ethoxy-2',3',5,6-tetramethyl-[1,1'-biphenyl]-2-yl 2,4-dichlorobenzoate, 2',3',5,6-tetramethyl-6'-propoxy-[1,1'-biphenyl]-2-yl 2,4-dichlorobenzoate, 6'-hydroxy-2',3',5,6-tetramethyl-[l,1'-biphenyl]-2-yl 2,4-dichlorobenzoate, 6'-methoxy-2',3',5,6-tetramethyl-[1,1'-biphenyl]-2-yl 2,4-dichlorobenzoate, 6'-hydroxy-2',3',5,6-tetramethyl-[1,1'-biphenyl]-2-yl 2,4,6-trichlorobenzoate, 6'-ethoxy-2',3',5,6-tetramethyl-[1,1'-biphenyl]-2-yl 2,4,6-trichlorobenzoate, 6'-methoxy-2',3',5,6-tetramethyl-[1,1'-biphenyl]-2-yl 2,4,6-trichlorobenzoate, 2',3',5,6-tetramethyl-6'-propoxy-[1,1'-biphenyl]-2-yl 2,4,6-trichlorobenzoate, 2',3',5,6-tetramethyl-6'-propoxy-[1,1'-biphenyl]-2-yl 3,5-dichlorobenzoate, 6'-hydroxy-2',3',5,6-tetramethyl-[l,1'-biphenyl]-2-yl 3,5-dichlorobenzoate, 6'-ethoxy-2',3',5,6-tetramethyl-[1,1'-biphenyl]-2-yl 3,5-dichlorobenzoate, 6'-methoxy-2',3',5,6-tetramethyl-[1,1'-biphenyl]-2-yl 3,5-dichlorobenzoate, 6'-hydroxy-2',3',5,6-tetramethyl-[l,1'-biphenyl]-2-yl 2,6-dichlorobenzoate, 2',3',5,6-tetramethyl-6'-propoxy-[1,1'-biphenyl]-2-yl 2,6-dichlorobenzoate, 6'-ethoxy-2',3',5,6-tetramethyl-[1,1'-biphenyl]-2-yl 2,6-dichlorobenzoate, 6'-methoxy-2',3',5,6-tetramethyl-[1,1'-biphenyl]-2-yl 2,6-dichlorobenzoate, 2',3',5,6-tetramethyl-6'-propoxy-[1,1'-biphenyl]-2-yl 3-chlorobenzoate, 6'-hydroxy-2',3',5,6-tetramethyl-[1,1'-biphenyl]-2-yl 3-chlorobenzoate, 6'-ethoxy-2',3',5,6-tetramethyl-[1,1'-biphenyl]-2-yl 3-chlorobenzoate, 6'-methoxy-2',3',5,6-tetramethyl-[1,1'-biphenyl]-2-yl 3-chlorobenzoate, 6'-hydroxy-2',3',5,6-tetramethyl-[1,1'-biphenyl]-2-yl 4-chlorobenzoate, 6'-methoxy-2',3',5,6-tetramethyl-[1,1'-biphenyl]-2-yl 4-chlorobenzoate, 6'-ethoxy-2',3',5,6-tetramethyl-[1,1'-biphenyl]-2-yl 4-chlorobenzoate, 2',3',5,6-tetramethyl-6'-propoxy-[1,1'-biphenyl]-2-yl 4-chlorobenzoate, 2'-hydroxy-[1,1'-biphenyl]-2-yl 2-chlorobenzoate, 2'-methoxy-[1,1'-biphenyl]-2-yl 3-chlorobenzoate, 2'-hydroxy-[1,1'-biphenyl]-2-yl 2,4-dichlorobenzoate, 2'-ethoxy-[1,1'-biphenyl]-2-yl 3-chlorobenzoate, 2'-methoxy-[1,1'-biphenyl]-2-yl 2,4-dichlorobenzoate, 2'-hydroxy-[1,1'-biphenyl]-2-yl 3,4-dichlorobenzoate, 2'-methoxy-[1,1'-biphenyl]-2-yl 2-chlorobenzoate, 2'-methoxy-[1,1'-biphenyl]-2-yl 3,4-dichlorobenzoate, 2'-hydroxy-[1,1'-biphenyl]-2-yl 3-chlorobenzoate, 2'-hydroxy-[1,1'-biphenyl]-2-yl 4-chlorobenzoate, 2'-methoxy-[1,1'-biphenyl]-2-yl 4-chlorobenzoate, 2'-ethoxy-[1,1'-biphenyl]-2-yl 2-chlorobenzoate, 2'-ethoxy-[1,1'-biphenyl]-2-yl 4-chlorobenzoate, 2'-methoxy-[1,1'-binaphthalen]-2-yl 3-chlorobenzoate, 2'-methoxy-[1,1'-binaphthalen]-2-yl 2-chlorobenzoate, 2'-hydroxy-[1,1'-binaphthalen]-2-yl 3-chlorobenzoate, 2'-hydroxy-[1,1'-binaphthalen]-2-yl 2-chlorobenzoate, 2'-ethoxy-[1,1'-binaphthalen]-2-yl 3-chlorobenzoate, 2'-ethoxy-[1,1'-binaphthalen]-2-yl 2-chlorobenzoate, 2'-ethoxy-[1,1'-binaphthalen]-2-yl 4-chlorobenzoate, 2'-hydroxy-5,5',6,6',7,7',8,8'-octahydro-[1,1'-binaphthalen]-2-yl 3,4-dichlorobenzoate, 2'-hydroxy-5',6-dimethyl-[1,1'-biphenyl]-2-yl 2-chlorobenzoate, 2'-hydroxy-5',6-dimethyl-[1,1'-biphenyl]-2-yl 3-chlorobenzoate, 2'-hydroxy-5,5',6,6',7,7',8,8'-octahydro-[1,1'-binaphthalen]-2-yl 2,3-dichlorobenzoate, 2'-hydroxy-6,6'-dimethyl-[1,1'-biphenyl]-2-yl 2-chlorobenzoate, 2'-methoxy-6,6'-dimethyl-[1,1'-biphenyl]-2-yl 3-chlorobenzoate.

The compounds falling in formula (I) can be added as such during the catalyst preparation process or, in the alternative, in the form of precursors that, due to reaction with other catalyst ingredients, are able to transform in the compounds of formula (I). In addition to the compounds of above formula (I) the solid catalyst components can also contain additional donors. Although there is no limitation on the type of additional donors, preferred are those selected from esters of benzoic acids possibly substituted with halogen or C₁-C₁₅ hydrocarbon groups on the phenyl ring.

As explained above, the catalyst components as herein described can comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds to be used in the preparation of the herein disclosed catalyst components are TiCl₄ and TiCl₃; furthermore, also Ti-haloalcoholates of formula Ti(OR)_{m-y}X_{y} can be used, where m is the valence of titanium, y is a number between 1 and m-1, X is halogen and R is a hydrocarbon radical having from 1 to 10 carbon atoms.

The solid catalyst component described in the present application can contain Ti atoms in an amount higher than 2.5%wt more preferably higher than 3.0% with respect to the total weight of said catalyst component. An amount ranging from 2.5 to 8% of titanium is especially preferred.

The preparation of the solid catalyst component can be carried out according to several methods. One method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{m-y}X_{y}, where m is the valence of titanium and y is a number between 1 and m, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl₄ (generally 0°C); the mixture is heated up to 80-130°C and kept at this temperature for 0.5-2 hours. The treatment with TiCl₄ can be carried out one or more times. In a preferred embodiment the electron donor compound is added during the first treatment with TiCl₄ in an amount such as to have a Mg/donor ratio in the range of 2 to 15 preferably from 4 to 10. In case additional donors are present, the donor addition is preferably split. In particular, the additional donor is preferably added during the first treatment with TiCl₄ while the donor of formula (I) is preferably added during a second treatment with TiCl₄. The preparation of catalyst components in spherical form are described for example in European Patent Applications EP-A-395083, EP-A-553805, EP-A-553806, EPA601525 and WO98/44009.

The solid catalyst components obtained according to the above method show a surface area (by B.E.T. method) generally between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.000Å generally ranges from 0.3 to 1.5 cm³/g, preferably from 0.45 to 1 cm³/g.

The solid catalyst component has an average particle size ranging from 5 to 120 µm and more preferably from 10 to 100 µm.

Regardless of the preparation method used, the final amount of the electron donor compound of formula (I) is such that its molar ratio with respect to the Ti atoms is from 0.01 :1 to 2:1, preferably from 0.05:1 to 1.2:1.

The solid catalyst components can be converted into catalysts for the polymerization of olefins by reacting them with organoaluminum compounds according to known methods.

In particular, it is provided a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and optionally,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, and tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

Suitable external electron-donor compounds include silicon compounds, ethers, esters, amines, heterocyclic compounds and particularly 2,2,6,6-tetramethylpiperidine and ketones.

Another class of preferred external donor compounds is that of silicon compounds of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms. Particularly preferred are the silicon compounds in which a is 1, b is 1, c is 2, at least one of R₇ and R₈ is selected from branched alkyl, cycloalkyl or aryl groups with 3-10 carbon atoms optionally containing heteroatoms and R₉ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R₈ is a branched alkyl or cycloalkyl group, optionally containing heteroatoms, and R₉ is methyl. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1:1 to 500:1, preferably from 1:1 to 300:1 and more preferably from 3:1 to 100:1.

Therefore, it is also described a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component as previously disclosed;
(ii) an alkylaluminum compound and,
(iii) optionally an electron-donor compound (external donor).

The polymerization process can be carried out according to known techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization is generally carried out at temperature of from 20 to 120°C, preferably of from 40 to 80°C. When the polymerization is carried out in gas-phase the operating pressure may range between 0.5 and 5 MPa, preferably between 1 and 4 MPa. In the bulk polymerization the operating pressure is may range between 1 and 8 MPa, preferably between 1.5 and 5 MPa.

As already mentioned, the catalyst of the present disclosure, are capable to simultaneously give very high activity, (over 70 kg of polymer per g of catalyst) with an isotactic index (XI%) over 97.5% which are not achievable with the prior art structures.

The following examples are given in order to illustrate the disclosure without limiting it.

### EXAMPLES

### CHARACTERIZATION

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Melt flow rate (MFR)

The melt flow rate MIL of the polymer was determined according to ISO 1133 (230°C, 2.16 Kg).

### Comparative example 1: synthesis of 6'-hydroxy-2',3',5,6-tetramethyl-[1,1'-biphenyl]-2-ylbenzoate

### First step: Synthesis of 2-(tert-butyl)-3,4-dimethylphenol

Into a 1 L round bottom flask under nitrogen are added 3,4-dimethylphenol (100 g, 0.82 mol), 2-chloro-2-methylpropane (267 mL, 3 eq.) and sulphuric acid (1.3 mL, 3% mol) then the mixture is refluxed until GC shows that the reaction is completed (10 hours). After this time the flask is cooled to room temperature and 400 mL of water are added together with 300 mL of toluene under stirring. The organic layer is separated and washed with water (2 x 150 mL), NaHCO₃(aq) and again with water. The toluene solution is used as such in the next step.

### Second step: Synthesis of 3,3'-di-tert-butyl-5,5',6,6'-tetramethyl-[1,1'-biphenyl]-2,2'-diol

The toluene solution of 2-(tert-butyl)-3,4-dimethylphenol from the previous step is charged into a 1 L round bottom flask with Cu(I)Cl (4.9 g, 6% mol), N,N,N',N'-tetramethylethylenediamine (11.1 mL, 9% mol) and water (1.8 mL, 12% mol). Air is bubbled through a porous frit into the mixture under stirring at room temperature until GC shows that the reaction is completed (7 hours). Acidic water is added under stirring then the organic layer is separated and washed with water until neutral pH, anhydrified over Na₂SO₄ and solvent is distilled off to afford 138 g of solid (yield 93% over two steps).

### Third step: Synthesis of 5,5',6,6'-tetramethyl-[1,1'-biphenyl]-2,2'-diol

3,3'-di-tert-butyl-5,5',6,6'-tetramethyl-[1,1'-biphenyl]-2,2'-diol obtained in the previous step (138 g, 0.39 mol) is charged into a 1 L round bottom flask equipped with a mechanical stirrer, together with toluene (390 mL, 1 mol/L) under nitrogen, then is cooled to 0°C and AlCl₃ (52 g, 1 eq) is added portionwise. The slurry is stirred at room temperature until GC shows that the reaction is completed (50 minutes) then is cooled with an ice/water bath and 200 mL of HCl 4 M are added. The slurry is filtered on a sintered glass funnel and washed thoroughly with water (500 mL x 3), NaHCO₃(aq) and i-hexanes (300 mL x 2). The wet solid is vacuum-dried at 80°C overnight to afford 90 g of GC pure white solid (96% of yield).

### Fourth step: Synthesis of 6'-hydroxy-2',3',5,6-tetramethyl-[1,1'-biphenyl]-2-yl benzoate

5,5',6,6'-tetramethyl-[1,1'-biphenyl]-2,2'-diol (10 g, 0.041 mol) is charged into a 500 mL round bottom flask equipped with a mechanical stirrer under nitrogen with toluene (200 mL, 0.2 mol/L), TiCl₄ (4.8 mL, 1.2 eq) and benzoyl chloride (5 mL, 1.05 eq). After 6 hours of stirring at room temperature, the obtained dark red powder is filtered under nitrogen and washed with toluene (2 x 100 mL), then is treated with acidic water/diethyl ether under vigorous stirring until red coloration disappears. The organic layer is separated and washed with water until neutral pH, anhydrified over Na₂SO₄ and solvent is distilled off to afford 13 g of pale yellow thick oil (99% purity GC, 91% yield).

### Inventive example 1 - Synthesis of 6'-hydroxy-2',3',5,6-tetramethyl-[1,1'-biphenyll-2-yl 2-chlorobenzoate

The synthesis of 6'-hydroxy-2',3',5,6-tetramethyl-[1,1'-biphenyl]-2-yl 2-chlorobenzoate is the same of comparative example 1, fourth step, except that 2-chlorobenzoyl chloride is used instead of benzoyl chloride.

### Inventive example 2 - Synthesis of 6'-hydroxy-2',3',5,6-tetramethyl-[1,1'-biphenyl]-2-yl 2,3-dichlorobenzoate

The synthesis of 6'-hydroxy-2',3',5,6-tetramethyl-[1,1'-biphenyl]-2-yl 2,3-dichlorobenzoate is the same of comparative example 1, fourth step, except that 2,3-dichlorobenzoyl chloride is used instead of benzoyl chloride.

### Inventive example 3 - Synthesis of 6'-hydroxy-2',3',5,6-tetramethyl-[1,1'-biphenyl]-2-yl 2,4-dichlorobenzoate

The synthesis of 6'-hydroxy-2',3',5,6-tetramethyl-[1,1'-biphenyl]-2-yl 2,4-dichlorobenzoate is the same of comparative example 1, except that 2,4-dichlorobenzoyl chloride is used instead of benzoyl chloride.

### Inventive example 4 - Synthesis of 6'-methoxy-2',3',5,6-tetramethyl-[1,1'-biphenyll-2-yl 3-chlorobenzoate

### First step: Synthesis of 6'-hydroxy-2',3',5,6-tetramethyl-[1,1'-biphenyl]-2-yl 3-chlorobenzoate

The synthesis of 6'-hydroxy-2',3',5,6-tetramethyl-[1,1'-biphenyl]-2-yl 3-chlorobenzoate is the same of comparative example 1, fourth step, except that 3-chlorobenzoyl chloride is used instead of benzoyl chloride.

### Second step: Synthesis of 6'-methoxy-2',3',5,6-tetramethyl-[1,1'-biphenyl]-2-yl 3-chlorobenzoate

6'-hydroxy-2',3',5,6-tetramethyl-[1,1'-biphenyl]-2-yl 3-chlorobenzoate (12 g, 0.032 mol) is charged into a 500 mL round bottom flask equipped with a magnetical stirrer under nitrogen with THF (150 mL, 0.2 mol/L) and methyl iodide (5.9 mL, 3 eq) then the mixture is cooled down to 0°C with an ice/water bath and NaH (1.1 mol, 1.1 eq) is added portionwise. After 3 hours at room temperature the mixture is quenched with acidic water under stirring and extracted with diethyl ether. The organic layer is separated and washed with water until neutral pH, anhydrified over Na₂SO₄ and solvent is distilled off to afford 12.1 g of thick oil which is crystalized from 24 mL of diisopropyl ether to obtain 8.6 g of pure product (70% yield).

### Inventive example 5 - Synthesis of 6'-methoxy-2',3',5,6-tetramethyl-[1,1'-biphenyl]-2-yl 4-chlorobenzoate

The synthesis of 6'-methoxy-2',3',5,6-tetramethyl-[1,1'-biphenyl]-2-yl 4-chlorobenzoate is the same of inventive example 4, second step, except that 6'-hydroxy-2',3',5,6-tetramethyl-[1,1'-biphenyl]-2-yl 4-chlorobenzoate is used instead of 6'-hydroxy-2',3',5,6-tetramethyl-[1,1'-biphenyl]-2-yl 3-chlorobenzoate.

### Comparative example 2 - Synthesis of 6'-methoxy-2',3',5,6-tetramethyl-[1.1'-biphenyl]-2-yl benzoate

The synthesis of 6'-methoxy-2',3',5,6-tetramethyl-[1,1'-biphenyl]-2-yl benzoate is the same of inventive example 4, second step, except that 6'-hydroxy-2',3',5,6-tetramethyl-[1,1'-biphenyl]-2-yl benzoate is used instead of 6'-hydroxy-2',3',5,6-tetramethyl-[1,1'-biphenyl]-2-yl 3-chlorobenzoate

### General procedure for preparation of the spherical adducts

An initial amount of microspheroidal MgCl₂·2.8C₂H₅OH was prepared according to the method described in Example 2 of WO98/44009, but operating on larger scale.

### Procedure for the preparation of the solid catalyst component using donors from Comparative Example 1 and Inventive Examples 1-3.

Into a 500 mL round bottom flask, equipped with mechanical stirrer, cooler and thermometer 250 mL of TiCl₄ were introduced at room temperature under nitrogen atmosphere. After cooling to 0°C, while stirring, ethyl benzoate and 10.0 g of the spherical adduct (prepared as described above) were sequentially added into the flask. The amount of charged ethyl benzoate was such to charge a Mg/EB molar ratio of 6. The temperature was raised to 40°C and the internal donor is added. The amount of charged internal donor was such to charge a Mg/donor molar ratio of 6. Then the temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off.

The solid was washed with anhydrous hexane six times (6 x 100 mL) in temperature gradient down to 60°C and one time (100 mL) at room temperature. The obtained solid was then dried under vacuum and analyzed.

### Procedure for the preparation of the solid catalyst component using donors from Comparative example 2 and Inventive Examples 4-5.

Into a 500 mL round bottom flask, equipped with mechanical stirrer, cooler and thermometer 250 mL of TiCl₄ were introduced at room temperature under nitrogen atmosphere. After cooling to 0°C, while stirring, the internal donor and 10.0 g of the spherical adduct (prepared as described above) were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off.

The solid was washed with anhydrous hexane six times (6 x 100 mL) in temperature gradient down to 60°C and one time (100 mL) at room temperature. The obtained solid was then dried under vacuum and analyzed.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 mL of anhydrous hexane, 0.76 g of AlEt₃, the external electron donor indicated in Table 1 (if used) and 0.006÷0.010 g of solid catalyst component. The autoclave was closed; subsequently 2.0 NL of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### Inventive Examples 1-5 and Comparative Examples 1-2.

The catalyst components were prepared according to the above described procedures using the donors prepared in Comparative Examples 1-2 and Inventive Examples 1-4. All of them were tested in polymerization of propylene, using the polymerization procedure described above. The results are listed in Table 1.

**Table 1.**

| **Ex.** | **Internal Donor Name** | **Polymerization** | | | |
|---|---|---|---|---|---|
| | | ED | Mileage kg/g | XI %wt | MIL g/10' |
| **C1** | 6'-hydroxy-2',3',5,6-tetramethyl-[1,1'-biphenyl]-2-yl benzoate | D | 67 | 98.3 | 2.6 |
| **1** | 6'-hydroxy-2',3',5,6-tetramethyl-[1,1'-biphenyl]-2-yl 2-chlorobenzoate | D | 86 | 98.3 | 1.1 |
| **2** | 6'-hydroxy-2',3',5,6-tetramethyl-[1,1'-biphenyl]-2-yl 2,3-dichlorobenzoate | D | 86 | 98.4 | 0.9 |
| **3** | 6'-hydroxy-2',3',5,6-tetramethyl-[1,1'-biphenyl]-2-yl 2,4-dichlorobenzoate | D | 75 | 98.6 | 1.1 |
| **4** | 6'-methoxy-2',3',5,6-tetramethyl-[1,1'-biphenyl]-2-yl 3-chlorobenzoate | D | 89 | 97.7 | 3.6 |
| **5** | 6'-methoxy-2',3',5,6-tetramethyl-[1,1'-biphenyl]-2-yl 4-chlorobenzoate | D | 88 | 98.2 | 2.3 |
| **C2** | 6'-methoxy-2',3',5,6-tetramethyl-[1,1'-biphenyl]-2-yl benzoate | D | 86 | 96.5 | 2.0 |

| | | | | | |
|---|---|---|---|---|---|
| ED: External Donor. D: dicyclopentyldimethoxysilane | | | | | |

## Claims

1. A solid catalyst component for the polymerization of olefins comprising Mg, Ti, Cl and at least an electron donor compound which is the reaction product obtained by bringing into contact a Mg compound and a Ti compound having at least a Ti-halogen bond with an electron donor selected from diphenol derivatives of formula (I) 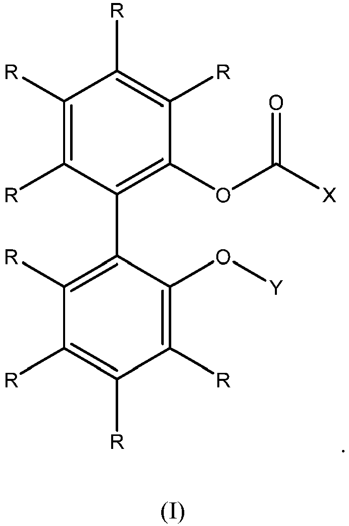 in which X is a chlorine substituted phenyl group, and Y is selected from hydrogen or R¹; the R groups, equal to or different from each other, are selected from hydrogen, halogen and C₁-C₁₅ hydrocarbon groups, optionally containing an heteroatom selected from halogen, P, S, N, O and Si, which can be fused together to form one or more cycles, and R¹ is a C₁-C₅ aliphatic group.

2. The catalyst component according to claim 1 in which R¹ groups are selected from hydrogen or linear C₁-C₅ alkyl groups.

3. The catalyst component according to claim 2 in which R¹ groups are hydrogen or methyl.

4. The catalyst component according to claim 1 in which X is a mono chloride substituted phenyl group.

5. The catalyst component according to claim 4 in which the chlorine atom is in ortho position.

6. The catalyst component according to claim 3 and 5 in which R¹ is hydrogen and the chlorine is in ortho position.

7. The catalyst component according to claim 1 in which X is a phenyl group containing two or more chlorines.

8. The catalyst component according to claim 7 in which at least one of the chlorine is in ortho position and the remaining in meta and/or para position.

9. The catalyst component according to claim 1 in which at least one of the R groups is different from hydrogen and selected from halogen or C₁-C₁₅ hydrocarbon groups.

10. The catalyst component according to claim 9 in which at least 4 of the R groups are different from hydrogen.

11. The catalyst component according to claim 5 in which R groups different from hydrogen are preferably selected from C₁-C₁₀ alkyl groups.

12. The catalyst component according to claim 1-11 further containing an additional electron donor compound selected from esters of benzoic acids possibly substituted with halogen or C₁-C₁₅ hydrocarbon groups on the phenyl ring.

13. A catalyst for the polymerization of olefins CH₂=CHR, in which R is hydrogen or a hydrocarbyl radical with 1-12 carbon atoms, comprising the product obtained by contacting:
(i) the solid catalyst component according to claims 1-12;
(ii)an alkylaluminum compound and optionally,
(iii) an external electron donor compound.

14. The catalyst component according to claim 13 in which the external donor compounds is selected from silicon compounds of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms.

15. A process for the (co)polymerization of olefins CH₂=CHR, in which R is hydrogen or a hydrocarbyl radical with 1-12 carbon atoms, carried out in the presence of a catalyst system according to any of claims 13-14.

## Patentansprüche

1. Feste Katalysatorkomponente zur Polymerisation von Olefinen, welche Mg, Ti, Cl und mindestens eine Elektronendonorverbindung umfasst und das Reaktionsprodukt ist, das erhalten wird, indem eine Mg-Verbindung und eine Ti-Verbindung, die mindestens eine Ti-Halogenbindung aufweist, mit einem Elektronendonor ausgewählt aus Diphenolderivaten mit der folgenden Formel (I) in Kontakt gebracht werden: 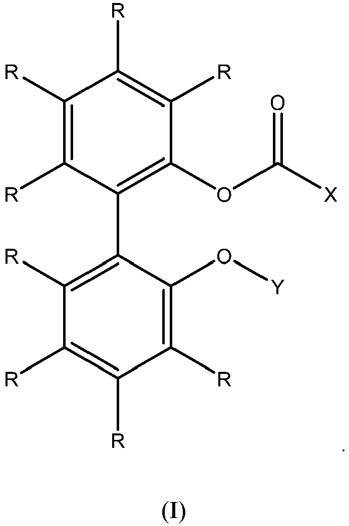 wobei X eine chlorsubstituierte Phenylgruppe ist, und Y ausgewählt ist aus Wasserstoff oder R¹; die Gruppen R, die gleich oder voneinander verschieden sind, ausgewählt sind aus Wasserstoff, Halogen und Ci- bis C₁₅-Kohlenwasserstoffgruppen, die gegebenenfalls ein Heteroatom ausgewählt aus Halogen, P, S, N, O und Si enthalten, welche miteinander unter Bildung von einem oder mehreren Ringen kondensiert sein können, und wobei R¹ eine aliphatische Ci- bis Cs-Gruppe ist.

2. Katalysatorkomponente nach Anspruch 1, wobei die Gruppen R¹ ausgewählt sind aus Wasserstoff oder linearen Ci- bis Cs-Alkylgruppen.

3. Katalysatorkomponente nach Anspruch 2, wobei die Gruppen R¹ Wasserstoff oder Methyl sind.

4. Katalysatorkomponente nach Anspruch 1, wobei X eine monochloridsubstituierte Phenylgruppe ist.

5. Katalysatorkomponente nach Anspruch 4, wobei das Chloratom sich in der ortho-Position befindet.

6. Katalysatorkomponente nach Anspruch 3 und 5, wobei R¹ Wasserstoff ist und das Chloratom sich in der ortho-Position befindet.

7. Katalysatorkomponente nach Anspruch 1, wobei X eine Phenylgruppe ist, die zwei oder mehr Chloratome enthält.

8. Katalysatorkomponente nach Anspruch 7, wobei mindestens eines der Chloratome sich in der ortho-Position befindet und das verbleibende sich in der meta- und/oder para-Position befindet.

9. Katalysatorkomponente nach Anspruch 1, wobei mindestens eine der Gruppen R sich von Wasserstoff unterscheidet und ausgewählt ist aus Halogen oder Cibis C₁₅-Kohlenwasserstoffgruppen.

10. Katalysatorkomponente nach Anspruch 9, wobei mindestens 4 der Gruppen R sich von Wasserstoff unterscheiden.

11. Katalysatorkomponente nach Anspruch 5, wobei die von Wasserstoff verschiedenen Gruppen R vorzugsweise ausgewählt sind aus Ci- bis C₁₀-Alkylgruppen.

12. Katalysatorkomponente nach Anspruch 1 bis 11, des Weiteren enthaltend eine zusätzliche Elektronendonorverbindung ausgewählt aus Estern von Benzoesäuren, die möglicherweise mit Halogen oder Ci- bis C₁₅-Kohlenwasserstoffgruppen am Phenylring substituiert sind.

13. Katalysator zur Polymerisation von Olefinen CH₂=CHR, worin R Wasserstoff oder ein Kohlenwasserstoffrest mit 1 bis 12 Kohlenstoffatomen ist, umfassend das Produkt, das erhalten wird durch Kontaktieren von:
(i) der festen Katalysatorkomponente nach den Ansprüchen 1 bis 12;
(ii) einer Alkylaluminiumverbindung und gegebenenfalls
(iii) einer externen Elektronendonorverbindung.

14. Katalysatorkomponente nach Anspruch 13, wobei die externen Donorverbindungen ausgewählt sind aus Siliciumverbindungen der Formel (R₇)ₐ(R₈)_{b}Si(OR₉)_{c}, wobei a und b ganze Zahlen von 0 bis 2 sind, c eine ganze Zahl von 1 bis 4 ist, und die Summe (a+b+c) 4 ist; R₇, R₈ und R₉ Reste mit 1 bis 18 Kohlenstoffatomen sind, die gegebenenfalls Heteroatome enthalten.

15. Verfahren zur (Co)polymerisation von Olefinen CH₂=CHR, worin R Wasserstoff oder ein Kohlenwasserstoffrest mit 1 bis 12 Kohlenstoffatomen ist, das in Gegenwart eines Katalysators nach einem der Ansprüche 13 bis 14 durchgeführt wird.

## Revendications

1. Constituant catalytique solide pour la polymérisation d'oléfines comprenant Mg, Ti, Cl et au moins un composé donneur d'électrons qui est le produit de réaction obtenu par mise en contact d'un composé de Mg et d'un composé de Ti présentant au moins une liaison Ti-halogène avec un donneur d'électrons choisi parmi les dérivés de diphénol de formule (I) 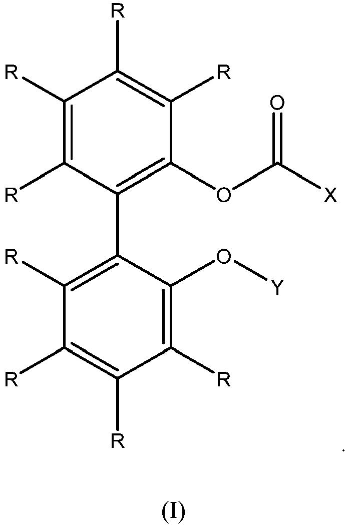 dans laquelle X représente un groupe phényle substitué par chlore et Y est choisi parmi hydrogène ou R¹ ; les groupes R, identiques ou différents les uns des autres, sont choisis parmi hydrogène, halogène et les groupes hydrocarbonés en C₁-C₁₅, contenant éventuellement un hétéroatome choisi parmi halogène, P, S, N, O et Si, qui peuvent être fusionnés ensemble pour former un ou plusieurs cycles et R¹ représente un groupe aliphatique en C₁-C₅.

2. Constituant catalytique selon la revendication 1, dans lequel les groupes R¹ sont choisis parmi hydrogène ou les groupes alkyle linéaires en C₁-C₅.

3. Constituant catalytique selon la revendication 2, dans lequel les groupes R¹ représentent hydrogène ou méthyle.

4. Constituant catalytique selon la revendication 1, dans lequel X représente un groupe phényle monosubstitué par chlorure.

5. Constituant catalytique selon la revendication 4, dans lequel l'atome de chlore est en position ortho.

6. Constituant catalytique selon la revendication 3 et 5, dans lequel R¹ représente hydrogène et l'atome de chlore est en position ortho.

7. Constituant catalytique selon la revendication 1, dans lequel X représente un groupe phényle contenant deux atomes de chlore ou plus.

8. Constituant catalytique selon la revendication 7, dans lequel au moins l'un des atomes de chlore est en position ortho et le/les autre(s) sont en position méta et/ou para.

9. Constituant catalytique selon la revendication 1, dans lequel au moins l'un des groupes R est différent d'hydrogène et choisi parmi halogène ou les groupes hydrocarbonés en C₁-C₁₅.

10. Constituant catalytique selon la revendication 9, dans lequel au moins 4 des groupes R sont différents d'hydrogène.

11. Constituant catalytique selon la revendication 5, dans lequel les groupes R différents d'hydrogène sont de préférence choisis parmi les groupes alkyle en C₁-C₁₀.

12. Constituant catalytique selon la revendication 1-11, contenant en outre un composé donneur d'électrons supplémentaire choisi parmi les esters d'acides benzoïques éventuellement substitués par halogène ou des groupes hydrocarbonés en C₁-C₁₅ sur le cycle phényle.

13. Catalyseur pour la polymérisation d'oléfines CH₂=CHR, dans lesquelles R représente hydrogène ou un radical hydrocarbyle comprenant 1 à 12 atomes de carbone, comprenant le produit obtenu par mise en contact de :
(i) le constituant catalytique solide selon les revendications 1 à 12 ;
(ii)un composé d'alkylaluminium et éventuellement,
(iii) un composé donneur d'électrons externe.

14. Constituant catalytique selon la revendication 13, dans lequel les composés donneurs externes sont choisis parmi les composés de silicium de formule (R₇)ₐ(R₈)_{b}Si(OR₉)_{c}, où a et b représentent des nombres entiers de 0 à 2, c représente un nombre entier de 1 à 4 et la somme (a+ b+c) vaut 4 ; R₇, R₈ et R₉ représentent des radicaux comprenant 1 à 18 atomes de carbone contenant éventuellement des hétéroatomes.

15. Procédé de (co)polymérisation d'oléfines CH₂=CHR, dans lesquelles R représente hydrogène ou un radical hydrocarbyle comprenant 1 à 12 atomes de carbone, mis en oeuvre en présence d'un système catalytique selon l'une quelconque des revendications 13 à 14.
